Europäisches Patentamt

European Patent Office

Office européen des brevets

(11) Publication number: **0 102 773**
**B1**

## EUROPEAN PATENT SPECIFICATION

(45) Date of publication of patent specification: **19.04.89**

(51) Int. Cl.⁴: **H 04 N 5/14, H 04 N 5/208**

(21) Application number: **83304600.6**

(22) Date of filing: **09.08.83**

(54) Delay circuit arrangements.

(30) Priority: **10.08.82 JP 137863/82**

(43) Date of publication of application:
**14.03.84 Bulletin 84/11**

(45) Publication of the grant of the patent:
**19.04.89 Bulletin 89/16**

(84) Designated Contracting States:
**AT DE FR GB NL**

(56) References cited:
**FR-A-2 509 561**

**INTERNATIONAL BROADCASTING
CONVENTION, 9th-13th September 1968,
LONDON (GB), Conférence publication, no. 40,
part 1, pages 3.16.1-3.16.4. D. MERCY: "A low
noise vertical and horizontal aperture
corrector"**

(73) Proprietor: **SONY CORPORATION
7-35 Kitashinagawa 6-Chome Shinagawa-ku
Tokyo 141 (JP)**

(72) Inventor: **Tanaka, Sadaaki c/o Patent Division
Sony Corporation 7-35 Kitashinagawa-6
Shinagawa-ku Tokyo (JP)**

(74) Representative: **Thomas, Christopher Hugo
et al
D Young & Co 10 Staple Inn
London WC1V 7RD (GB)**

Courier Press, Leamington Spa, England.

## Description

This invention relates to delay circuit arrangements suitable for contour compensation processing of video signals.

Video signals in video systems such as television receivers and television cameras pass through various electric circuits and signal transmission lines having finite operational frequency ranges. Therefore, attenuation of high frequency components occurs, resulting in reduction of resolution. By way of example, if the luminance signal contains a 3.58 MHz colour sub-carrier, a 35.8 MHz beat brilliance variation results in the reproduced image. To eliminate such beat interference, the video amplifier circuit in a colour television receiver has frequency characteristics such that the colour sub-carrier is attenuated by more than 15 to 16 dB. However, in such a video amplifier circuit, the high frequency components of the video signal are attenuated, resulting in reduction in the resolution of the reproduced image. In a shadow-mask type cathode ray tube, the brilliance modulation efficiency tends to be reduced when the frequency exceeds 2 MHz. Such reduction of the brilliance modulation efficiency reduces the contrast, so reducing the resolution.

To compensate for such loss of resolution, it has been the practice to effect contour compensation processing on portions of the luminance signal waveform corresponding to the contour of the image, to produce overshoot or undershoot of 20 to 30%. This processing has the effect of increasing the sharpness of the contour portions of the image, thus improving the resolution.

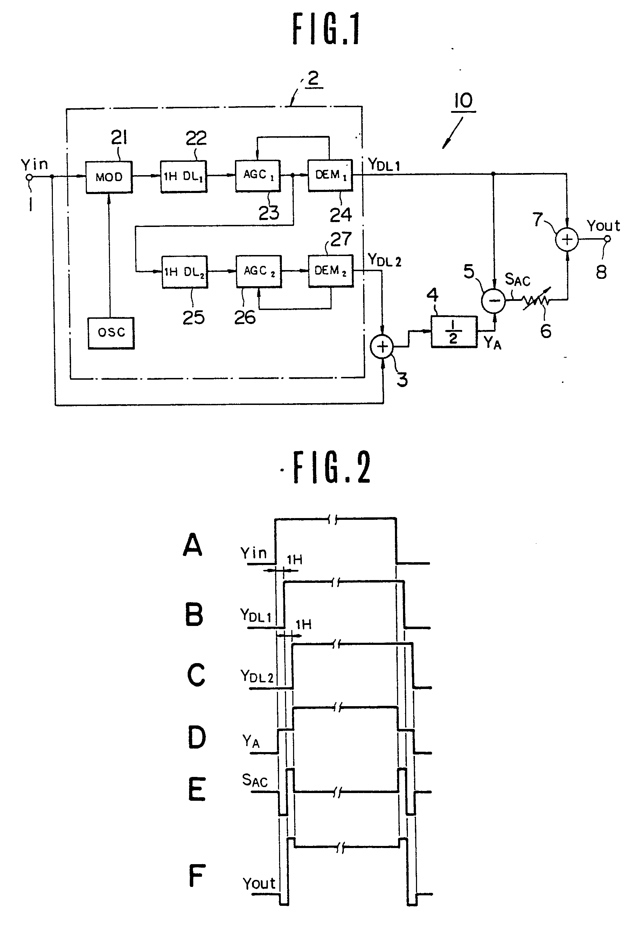

A vertical contour compensation circuit 10 as shown in Figure 1 of the accopanying drawings has been used for improving the resolution of the image in the vertical direction thereof.

In the vertical contour compensation circuit 10 shown in Figure 1, an input luminance signal $Y_{in}$ is supplied to a signal input terminal 1 to be fed to a delay line 2 and a first adder 3. The input luminance signal $Y_{in}$ has a waveform as shown, for example, in Figure 2A of the accompanying drawings. The delay line 2 produces a first delayed luminance signal $Y_{DL1}$ having a waveform as shown in Figure 2B of the accompanying drawings, and which is delayed relative to the input luminance signal $Y_{in}$ by one horizontal scanning period 1 H, and a second delayed luminance signal $Y_{DL2}$ having a waveform as shown in Figure 2C of the accompanying drawings, which is delayed relative to the input luminance signal $Y_{in}$ by 2 H. The first delayed luminanace signal $Y_{DL1}$ obtained from the delay line 2 is fed to the subtracter 5 and a second adder 7. The second delayed luminance signal $Y_{DL2}$, on the other hand, is fed to the first adder 3. The first adder 3 adds the input luminance signal $Y_{in}$ and second delayed luminance signal $Y_{DL2}$, and feeds the resulting signal $Y_A$ (having a waveform as shown in Figure 2D of the accompanying drawings) through an attenuator 4 to the subtracter 5. The subtracter 5 subtracts the signal $Y_A$ from the first delayed luminance signal $Y_{DL1}$ to obtain a contour compensation sigal $S_{AC}$ having a waveform as shown in Figure 2E of the accompanying drawings. This contour compensation signal $S_{AC}$ is fed through a level controller 6 to the second adder 7. The second adder 7 superimposes the contour compensation signal $S_{AC}$ on the first delayed luminance signal $Y_{DL1}$ and produces an output luminance signal $Y_{out}$ as shown in Figure 2F of the accompanying drawings. The signal $Y_{out}$ appears at an output terminal 8. It has a vertical contour compensated waveform with an overshoot and an undershoot resulting from the superimposition of the contour compensation signal $S_{AC}$ on the luminance change portions, that is, contour portions in the vertical direction of the image.

The delay line 2 in the vertical contour compensation circuit 10 usually uses two 1 H delay lines 22 and 25 each providing a delay time equal to 1 H. Referring to Figure 1, the input luminance signal $Y_{in}$ supplied to the input terminal 1 is fed to an amplitude modulator 21 in the delay line 2 for amplitude modulation. The output of the amplitude modulator 21 is fed to the first delay line 22. The delayed output signal from the first delay line 22 is fed through a first gain controlled amplifier 23 to a first demodulator 24. The first gain controlled amplifier 23 is gain controlled by the output of the first demodulator 24. The delayed output signal from the first delay line 22 is fed through the first gain controlled amplifier 23 to the second delay line 25. The delayed output signal from the second delay line 25 is fed through a second gain controlled amplifier 26 to a second demodulator 27. When the input luminance signal $Y_{in}$ as shown in Figure 2A is fed to the amplitude modulator 21, the first demodulator 24 demodulates the 1 H delayed luminance signal from the first delay line 22 and produces the first delayed luminance signal $Y_{DL1}$ delayed by 1 H relative to the input luminance signal $Y_{in}$ as shown in Figure 2B. The second demodulator 27 demodulates the luminance signal that has been delayed by 1 H in each of the first and second delay lines 22 and 25, and produces the second delayed luminance signal $Y_{DL2}$ delayed by 2 H relative to the input luminance signal $Y_{DL2}$ as shown in Figure 2C.

As has been shown, the delay line 2 in the vertical contour compensation circuit 10 uses two 1 H delay lines 22 and 25 in order to obtain the first and second delayed luminance signals $Y_{DL1}$ and $Y_{DL2}$ delayed by 1 H and 2 H relative to the input luminance signal $Y_{in}$, respectively. However, delay lines are generally expensive, and the vertical contour compensation circuit 10, which used two high performance 1 H delay lines which are required to provide a comparatively long delay time and nevertheless have wide frequency band characteristics, is inevitably very expensive, the major part of the price being accounted for by the two delay lines. Moreover, the signal level attenuation and temperature characteristics vary with invidual delay lines even of the same ratings and specifications. Therefore, where the two delay lines 22 and 25 are used as in the above case, the delayed output signals must be passed through the gain controlled amplifiers 23 and 26 for automatic level control.

International Broadcasting Convention, 9—13 September 1968, London, conference publication, no 40, part 1, pages 3.16.1 to 3.16.4 discloses a delay circuit arrangement generally as the precharacterizing part of claim 1.

According to the present invention there is provided a delay circuit arrangement comprising:

modulating means for effecting contour modulation of a signal using a signal from a carrier oscillator as a carrier;

delay means for delaying the modulation output of said modulating means;

demodulating means for effecting demodulation by synchronous detection; and

control means;

said demodulating means producing a first demodulated signal delayed relative to said first input signal supplied to said modulating means by an amount determined by said delay means and a second demodulated signal delayed relative to said first input signal by double said amount;

characterized by:

said delay means being a single delay device connected between said modulating means and said demodulating means;

variable phase shifting means for phase shifting said carrier oscillator output signal;

said demodulating means using the output of said variable phase shifting means as a synchronizing signal; and

adding means for superimposing a reference signal in a first demodulated signal from said demodulated means corresponding to a first input signal to said modulating means and supplying the resultant signal as a second input signal to said modulating means;

said control means controlling the amount of phase shift by said variable phase shifting means according to the reference signal demodulated by said demodulating means.

The invention will now be described by way of example with reference to the accompanying drawings, in which:

Figure 1 is a block diagram of a prior art vertical contour compensation circuit;

Figure 2 shows waveforms for explaining the operation of the circuit of Figure 1;

Figure 3 is a block diagram of an embodiment of the invention;

Figure 4 is a vector diagram for explaining the operation of first and second amplitude modulators in the embodiment;

Figure 5 is a waveform diagram showing an input signal to the second amplitude modulator; and

Figures 6 and 7 are vector diagrams for explaining the operation of a voltage controlled variable phase shifter in the embodiment.

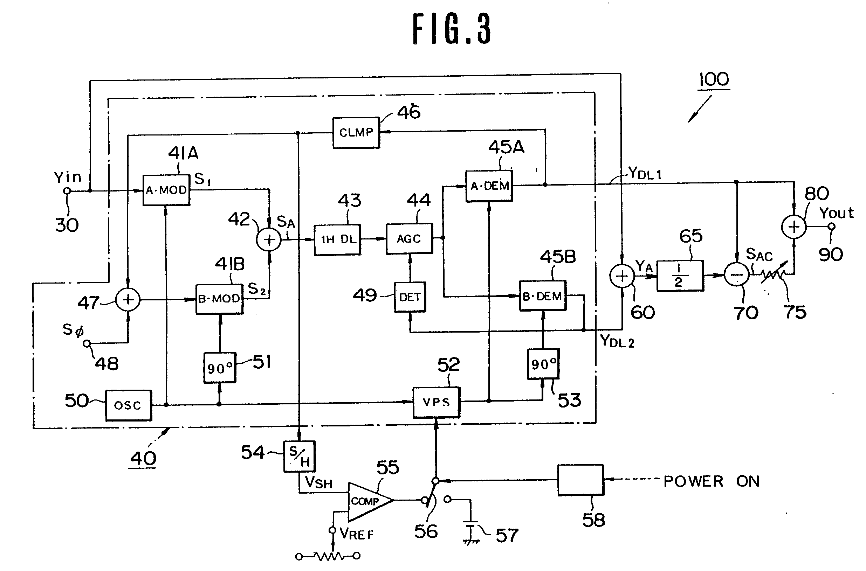

Figure 3 is a block diagram showing an embodiment of the invention applied to a vertical contour compensation circuit.

The illustrated vertical contour compensation circuit 100 incorporates a delay circuit 40, which employs a single 1 H delay line 43 which can provide first and second delayed luminance signals $Y_{DL1}$ and $Y_{DL2}$ respectively delayed 1 H and 2 H relative to an input luminance signal $Y_{in}$. A first adder 60 adds the input luminance signal $Y_{in}$ which is supplied to an input terminal 30 and the second delayed luminance signal $Y_{DL2}$. A subtracter 70 produces a contour compensation signal $S_{AC}$ from the first delayed luminance signal $Y_{DL1}$ and the sum signal from the first adder 60. A second adder 80 superimposes the contour compensation signal $S_{AC}$ on the first delayed luminance signal $Y_{DL1}$ to obtain a vertical contour compensated output luminance signal $Y_{out}$.

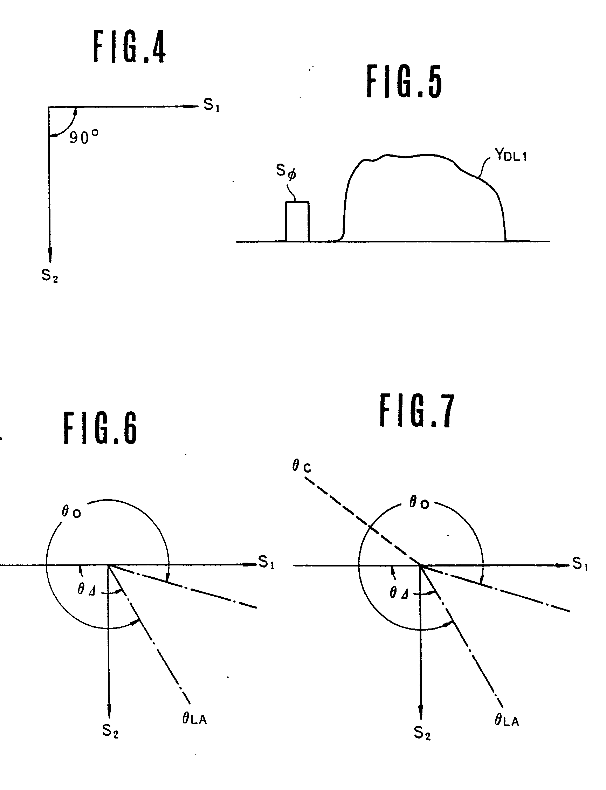

The delay circuit 40 also includes first and second amplitude modulators 41A and 41B for effecting so-called orthogonal modulation of a carrier from a carrier oscillator 50. The input luminance signal supplied to the input terminal 30 is fed to the first amplitude modulator 41A. The carrier output signal from the carrier oscillator 50 is supplied directly to the first amplitude modulator 41A, while it is supplied to the second amplitude modulator 41B through a phase shifter 51 for shifting the phase by 90°. The orthogonal modulation is thus done with carriers 90° out of phase with each other to produce first and second amplitude modulated components $S_1$ and $S_2$ which are 90° out of phase with each other as shown in the vector diagram of Figure 4, these modulated components $S_1$ and $S_2$ being fed to an adder 42 to be added together. The resultant sum signal $S_A$ from the adder 42 is fed through the 1 H delay line 43 to a voltage controlled variable gain amplifier 44. The 1 H delay line 43 delays the sum signal $S_A$ by 1 H. The voltage controlled variable gain amplifier 44 effects insertion loss temperature compensation of the 1 H delay line, and it is gain controlled by the output of a reference signal detector 49 to be described later. The output of the voltage controlled variable gain amplifier 44 is fed to first and second demodulators 45A and 45B. The carrier output signal from the carrier oscillator 50 is suplied as a synchronizing signal through a voltage controlled variable phase shifter 52 to the first and second demodulators 45A and 45B for demodulating the sum signal output from the voltage controlled variable gain amplifier 44 by synchronous detection. A phase shifter 53 provides a phase difference of 90° between the synchronizing signals supplied to the demodulators 45A and 45B. The amount of phase shift by the voltage controlled variable phase shifter 52 is controlled by the output of a level comparator 55 to be described later.

The first demodulator 45A demodulates only a component of the sum signal output of the voltage controlled variable gain amplifier 44 corresponding to the first amplitude modulation $S_1$ by synchronous detection of the sum signal output. It recovers the first delayed luminance signal $Y_{DL1}$

delayed 1 H relative to the input luminance signal $Y_{in}$, because the sum signal output fed to it from the variable gain amplifier 44 has been delayed 1 H through the 1 H delay line 43 and the first amplitude modulated component $S_1$ in the sum signal $S_A$ is the amplitude modulation of the input luminance signal $Y_{in}$ on the carrier.

The first delayed luminance signal $Y_{DL1}$ from the first demodulator 45A is fed to the subtracter 70 and the second adder 80 as mentioned earlier. It is further fed through a clamp circuit 46 in the delay circuit 40 to a sample/hold circuit 54 and an adder 47. A reference signal $S\phi$ coupled to a reference signal input terminal 48 is fed to the adder 47 to be superimposed on the first delayed luminance signal $Y_{DL1}$ at a position corresponding to the blanking period as shown in Figure 5. The output of the adder 47, consisting of the reference signal $S\phi$ and the first delayed luminance signal $Y_{DL1}$ superimposed on each other, is fed to the second amplitude modulator 41B.

The second demodulator 45B, which corresponds to the second amplitude modulator 41B, demodulates only a component of the sum signal output of the voltage controlled variable gain amplifier 44 corresponding to the second amplitude modulated component $S_2$, by synchronous detection of the sum signal output. It recovers the second delayed luminance signal $Y_{DL2}$, which is delayed 1 H relative to the first delayed luminance signal $Y_{DL1}$, that is, delayed 2 H relative to the input luminance signal $Y_{in}$, under the control of the reference signal $S\phi$, because the second amplitude modulated component $S_2$ is the amplitude modulation of the output consisting of the reference signal $S\phi$ and the first delayed luminance signal $Y_{DL1}$ superimposed on each other on the carrier, and has been delayed 1 H in the 1 H delay line 43 before being fed to it.

The second delayed luminance signal $Y_{DL2}$ is fed to the first adder 60 for addition to the input luminance Signal $Y_{in}$. The sum signal $Y_a$ from the first adder 60 is fed through an attenuator 65 to the subtracter 70. The subtracter 70 subtracts the first delay luminance signal $Y_{DL1}$ and the sum signal $Y_A$ one from the other to obtain the contour compensation signal $S_{AC}$. The second adder 80 superimposes the contour compensation signal $S_{AC}$ on the first delayed luminance signal $Y_{DL1}$, whereby the vertical contour compensated output luminance signal $Y_{out}$ is produced at an output terminal 90.

In this embodiment, a reference signal detector 49 detects the reference signal $S\phi$ demodulated by the second demodulator 45B and controls the gain of the voltage controlled variable gain amplifier 44 to make the signal level of the reference signal $S\phi$ constant. By this automatic gain control function, the insertion loss temperature compensation of the 1 H delay line 43 is done in the voltage controlled variable gain amplifier 41 on the sum signal input thereto, that is the first and second amplitude modulation components $S_1$ and $S_2$, which have been delayed in the 1 H delay line 43. The first and second demodulators 45A and 45B, to which the sum signal $S_A$ is fed through the voltage controlled variable gain amplifier 44, demodulate the first delayed luminance signal $Y_{DL1}$ completely free from the reference signal $S\phi$, so long as the phase relation of the synchronous detection, that is, the phase relation between the synchronizing signals, is correct.

In this embodiment, the output signal of the carrier oscillator 50 is supplied as the synchronizing signal through the voltage controlled variable phase shifter 52 to the first and second demodulators 45A and 45B. The amount of phase shift by the voltage controlled variable phase shifter 52 is controlled according to the output of the level comparator 55. More specifically, the level comparator 55 compares a reference voltage $V_{REF}$ supplied to one input terminal of it with hold voltage $V_{SH}$ supplied from the sample/hold circuit 54. The output representing the result of the comparison is fed through a signal selection switch 56 to the voltage controlled variable phase shifter 52. The sample/hold circuit 54 samples and holds the output of the clamp circuit 46 at a position correponding to the reference signal $S\phi$ superimposed on the first delayed luminance signal YDL1. The level comparator 55 compares the levels of the reference voltage $V_{REF}$, which is equal in level to the clamp voltage of the clamp circuit 46, that is, the first delayed luminance signal $Y_{DL1}$, and the hold voltage $V_{SH}$. The first delayed luminance signal $Y_{DL1}$, demodulated by the first demodulator does not contain any component corresponding to the second modulation component $S_2$ of the second amplitude modulator 41B, so long as the phase of synchronous detection by the first demodulator 45A is correct. In other words, with the right phase of synchronous detection by the first demodulator 45A the first delayed luminance signal $Y_{DL1}$ fed to the sample/hold circuit 54 does not contain the reference signal $S\phi$. In this case, the clamp level is sampled and held by the sample/hold circuit 54.

It is to be understood that by controlling the amount of phase shift by the voltage controlled variable phase shifter 52 according to the output of the level comparator 55, which compares the hold voltage $V_{SH}$ from the sample/hold circuit 54 with the reference voltage $V_{REF}$ equal to the clamped voltage, the correct phase of the synchronizing signal supplied to the first demodulator 45A can be maintained. Also, by feeding the synchronizing signal noted above through the 90° phase shifter 53 to the second demodulator 45B, the correct phase of the synchronous detection by the second demodulator 45B is maintained. In other words, through automatic phase control of the synchronizing signals using the voltage controlled variable phase shifter 52, the correct phases of synchronous detection by the demodulators 45A and 45B can be maintained stably and reliably irrespective of variations of the delay characteristics of the 1 H delay line 43 due to temperature changes or aging.

The control state, in which the automatic phase control loop described above is established when power is first applied by closing a power switch is not known. If the phase of the synchronous detection is deviated by 180° or more at the time of the establishment of the loop, stable pull-in cannot be obtained. For example, if the phase of the synchronous detection of the first demodulator 45A is in a range indicated by $\theta_\Delta$ in Figure 6, where the phase range of the voltage controlled variable phase shifter 52 is indicated at $\theta_0$, the automatic phase control is stopped at one limit $\theta_{LA}$ of the range $\theta_0$, so that the phase can no longer be locked at the correct phase.

In this embodiment, the amount of phase shift by the voltage controlled variable phase shifter 52 is tentatively fixed at the center $\theta_c$ of the phase range as shown in Figure 7 at the time of the closure of the power switch. By so doing, reliable pull-in to the correct phase can be obtained. More specifically, at the time of the closure of the power switch, the selection switch 56 is tentatively switched to a fixed power supply 57 by a time constant circuit 58, which detects the rising of the power source voltage. The voltage of the fixed power supply 57, which is supplied as the control voltage to the voltage controlled variable phase shifter 52, is set to fix the phase amount to the centre $\theta_c$. The selection switch 56 is switched to the level comparator 55 after the lapse of a predetermined period of time determined by the time constant circuit 58. With this switching, the voltage controlled variable phase shifter 52 in the phase control loop starts the pull-in of phase from the center $\theta_c$. The synchronous detection phase thus can be automatically and reliably locked to the correct phase.

As has been shown, in the above embodiment the delayed luminance signals $Y_{DL1}$ and $Y_{DL2}$ respectively delayed 1 H and 2 H behind the input luminance signal $Y_{in}$ for effecting the vertical contour compensation can be obtained with a single 1 H delay line 43, and the insertion loss temperature compensation of the 1 H delay line 43 is obtained through the automatic gain control function of the variable gain amplifier 44, so that the levels of the delayed luminance signals $Y_{DL1}$ and $Y_{DL2}$ can be automatically controlled to obtain stable regular vertical contour compensation processing.

As has been described in the foregoing, two delayed signals delayed by different amounts can be obtained with a simple construction utilizing a single delay line and orthogonal modulation/demodulation means. Also, the orthogonally modulated signal can be reliably demodulated for steady recovery of the delayed signals through synchronous detection using the phase controlled carrier from the variable phase shifter as the synchronizing signal.

## Claims

1. A delay circuit arrangement comprising:
   modulating means (41A, 41B) for effecting con-tour modulation of a signal using a signal from a carrier oscillator (50) as a carrier;
   delay means (43) for delaying the modulation output of said modulating means (41A, 41B);
   demodulating means (45A, 45B) for effecting demodulation by synchronous detection; and
   control means (54, 55, 56);
   said demodulating means (45A, 45B) producing a first demodulated signal delayed relative to said first input signal supplied to said modulating means (41A, 41B) by an amount determined by said delay means (43) and a second demodulated signal delayed relative to said first input signal by double said amount;
   characterized by:
   said delay means (43) being a single delay device (43) connected between said modulating means (41A, 41B) and said demodulating means (45A, 45B);
   variable phase shifting means (52) for phase shifting said carrier oscillator output signal;
   said demodulating means (45A, 45B) using the output of said variable phase shifting means (52) as a synchronizing signal; and
   adding means (47) for superimposing a reference signal on a first demodulated signal from said demodulating means (45A, 45B) corresponding to a first input signal to said modulating means (41A, 41B) and supplying the resultant signal as a second input signal to said modulating means (41A, 41B);
   said control means (54, 55, 56) controlling the amount of phase shift by said variable phase shifting means (52) according to the reference signal demodulated by said demodulating means (45A, 45B).

2. A delay circuit arrangement according to claim 1 further comprising a gain controlled amplifier (44) with the gain thereof controlled according to the output of said demodulating means (45A, 45B), the delayed signal from said delay means (43) being supplied to said demodulating means (45A, 45B) through said gain controlled amplifier (44).

3. A delay circuit arrangement according to claim 2 wherein the gain of said gain controlled amplifier (44) is controlled according to said reference signal.

## Patentansprüche

1. Verzögerungsschaltungsanordnung,
   mit einer Modulationseinrichtung (41A, 41B) zur Durchführung einer Hüllkurvenmodulation eines Signals, wobei das Ausgangssignal eines Trägeroszillators (50) als Trägersignal dient,
   mit einer Verzögerungseinrichtung (43) zur Verzögerung des modulierten Ausgangssignals der Modulationseinrichtung (41A, 41B),
   mit einer Demodulationseinrichtung (45A, 45B) zur Durchführung einer Synchron detektor-Demodulation,
   sowie mit einer Steuereinrichtung (54, 55, 56),
   wobei die Demodulationseinrichtung (45A, 45B) ein erstes demoduliertes Signal erzeugt, das gegenüber dem der Modulationseinrichtung (41A, 41B) zugeführten ersten Eingangssignal um einen durch die Verzögerungseinrichtung (43) bestimmten Betrag verzögert ist, sowie ein zweites demoduliertes Signal, das gegenüber dem genannten ersten Eingangssignal um das Doppelte dieses Betrags verzögert ist,

dadurch gekennzeichnet,

daß die Verzögerungseinrichtung (43) eine zwischen der Modulationseinrichtung (41A, 41B) und der Demodulationseinrichtung (45A, 45b) angeordnete einzige Verzögerungsanordnung (43) ist,

daß eine variable Phasenschieberanordnung (52) zur Phasenverschiebung des Ausgangssignals des Trägeroszillators (50) vorgesehen ist,

daß die Demodulationseinrichtung (45A, 45B) das Ausgangssignal der variablen Phasenschieberanordnung (52) als Synchronisiersignal verwendet,

daß eine Additionseinrichtung (57) vorgesehen ist, die einem dem ersten Eingangssignal der Modulationseinrichtung (41A, 41B) entsprechenden demodulierten Signal der Demodulationseinrichtung (45A, 45B) ein Referenzsignal überlagert und das resultierende Signal der Modulationseinrichtung (41A, 41B) als zweites Eingangssignal zuführt,

und daß die Steuereinrichtung (54, 55, 56) die Größe der von der variablen Phasenschieberanordnung (52) bewirkten Phasenverschiebung in Abhängigkeit von dem von der Demodulationseinrichtung (45A, 45B) demodulierten Referenzsignal steuert.

2. Verzögerungsschaltungsanordnung nach Anspruch 1, gekennzeichnet durch einen Verstärker (44) mit steuerbarem Verstärkungsgrad, dessen Verstärkungsgrad in Abhängigkeit von dem Ausgangssignal der Demodulationseinrichtung (45A, 45B) gesteuert wird, wobei das durch die Verzögerungseinrichtung (43) verzögerte Signal der Demodulationseinrichtung (45A, 45B) über diesen Verstärker (44) zugeführt wird.

3. Verzögerungsschaltungsanordnung nach Anspruch 2, bei der der Verstärkungsgrad des Verstärkers (44) in Abhängigkeit von dem Referenzsignal gesteuert wird.

**Revendications**

1. Une structure de circuit de retard comprenant:

des moyens de modulation (41A, 41B) destinés à effectuer un modulation de contour d'un signal en utilisant en tant que porteur un signal provenant d'un oscillateur de porteur (50);

des moyens de retard (43) destinés à retarder le signal de sortie de modulation des moyens de modulation (41A, 41B);

des moyens de démodulation (45A, 45B) destinés à effectuer une démodulation par détection synchrone; et

des moyens de commande (54, 55, 56);

les moyens de démodulation (45A, 45B) produisant un premier signal démodulé qui est retardé par rapport au premier signal d'entrée appliqué aux moyens de modulation (41A, 41B), avec une durée de retard qui est déterminée par les moyens de retard (43), et un second signal démodulé qui est retardé du double de cette durée par rapport au premier signal d'entrée;

caractérisée en ce que:

les moyens de retard (43) consistent en un seul dispositif de retard (43) qui est connecté entre les moyens de modulation (41A, 41B) et les moyens de démodulation (45A, 45B);

des moyens déphaseurs variables (52) sont incorporés pour déphaser le signal de sortie de l'oscillateur de porteur;

les moyens de démodulation (45A, 45B) utilisent en tant que signal de synchronisation le signal de sortie des moyens déphaseurs variables (52); et

des moyens d'addition (47) sont incorporés pour superposer un signal de référence sur un premier signal démodulé qui provient des moyens de démodulation (45A, 45B) et qui correspond à un premier signal d'entrée appliqué aux moyens de modulation (41A, 41B);

les moyens de commande (54, 55, 56) commandant la valeur de déphasage des moyens déphaseurs variables (52) conformément au signal de référence qui est démodulé par les moyens de démodulation (45A, 45B).

2. Une structure de circuit de retard selon la revendication 1, comprenant en outre un amplificateur à gain commandé (44) dont le gain est commandé conformément au signal de sortie des moyens de démodulation (45A, 45B), le signal retardé provenant des moyens de retard (43) étant appliqué aux moyens de démodulation (45A, 45B) par l'intermédiaire de cet amplificateur à gain commandé (44).

3. Une structure de circuit de retard selon la revendication 2, dans laquelle le gain de l'amplificateur à gain commandé (44) est commandé conformément au signal de référence.

# FIG.1

# FIG.2

FIG.3

# FIG.4

# FIG.5

# FIG.6

# FIG.7